# EUROPEAN PATENT SPECIFICATION

(11) **EP 1 672 040 B1**
(45) Date of publication and mention of the grant of the patent: **02.04.2008**
(21) Application number: 05292063.4
(22) Date of filing: 05.10.2005
(51) Int. Cl.: C09D 123/06, C08L 23/06

(54) **Coating composition for weatherstrips of automobile vehicles**
Beschichtungszusammensetzung für Fahrzeugdichtungsstreifen
Composition de revêtement pour des joints de portières de véhicules

(30) Priority: 16.12.2004 KR 2004107198
(43) Date of publication of application: 21.06.2006
(73) Proprietor: Hyundai Engineering Plastics Co., Ltd, Tangjin-gun Chungnam 343-856 (KR)
(72) Inventor: Lee, Hae Won, Yuseong-gu Daejeon 305-728 (KR); Jung, Hwan Kyu, Yuseong-gu Daejeon 305-390 (KR); Lee, Young Keun, Yuseong-gu Daejeon 305-728 (KR); Kim, Ki Yup, Yuseong-gu Daejeon 305-810 (KR)
(74) Representative: Portal, Gérard

(56) References cited:
- EP-A- 0 318 841
- US-A- 3 148 169
- US-A- 5 110 685
- US-A1- 2004 132 854

## Description

### BACKGROUND OF THE INVENTION

### 1. Field of the Invention

The present invention relates to a coating composition for automobile weatherstrips. More particularly, the present invention is directed to a coating composition for automobile weatherstrips, in which inexpensive and readily handleable general-purpose polyolefin resins are used in a coating agent for a preparation of thin film to protect the portion of a glass run channel that contacts the window glass of an automobile door under pressure when the window is opened and closed by vertical movement of the window glass, thus creating economic benefits as well as exhibiting uniform desired properties.

### 2. Description of the Related Art

Typically, window glass of an automobile door is structured in such a manner that it may be opened and closed a plurality of times by vertical movement thereof according to intentions of a user. To this end, a glass run channel, which is a type of automobile weatherstrip, is provided between window glass and a window frame. The opening and closing operations of the window glass sliding along the glass run channel should be softly and stably conducted for the user's convenience. In addition, the pressure contacting portion of the glass run channel should be resistant to abrasion, since the window is repeatedly opened and closed by vertical movement of the window glass over a long period of time.

Conventionally, a glass run channel of an automobile is made of rubber, such as soft polyvinyl chloride (PVC) or ethylene/propylene/diene (EPDM) terpolymer. Such a glass run channel is intended to have low friction resistance and high abrasion resistance on the surface thereof, which contacts the window glass under pressure, by laminating a urethane resin or nylon film on the surface thereof and then embossing the laminated surface to decrease the contacting area with the window glass. However, the above technique is disadvantageous because it is required to apply an adhesive on the surface of the glass run channel made of PVC or EPDM for the lamination and to conduct an embossing treatment either before or after the lamination, thus rendering the overall processes complicated. In particular, the above technique is difficult to apply to a structure having a complicated and curved surface in practice. In addition, since the glass run channel thus treated still has high friction resistance and poor durability, the opening and closing operations of the window glass are not gentle.

To alleviate the above problems and solve the environmental problems caused by the use of EPDM and PVC at the same time, a process of coextruding thermoplastic elastomer (TPE), a recently known environmentally friendly material, for use in a main body of a glass run channel, and a coating agent having low friction resistance for use in a portion thereof contacting the window glass under pressure, is employed.

In addition, the coating agent used in the glass run channel should have low friction resistance to exhibit desired performance. For this, methods of reducing the area contacting the window glass have been proposed. That is, small and regular protrusions are formed on the surface of the coating agent film, to reduce the area contacting the window glass. Such techniques are exemplified as follows.

U.S. Patent No. 5,343,655 discloses a weatherstrip for automobile window glass, comprising a base portion formed of hard synthetic resin, a window glass support connected to the base portion and formed of soft synthetic resin, and a contacting band layer disposed on the support for contacting the window glass, in which the contacting band layer is formed of two synthetic resins having different melting points (a first synthetic resin having a high melting point and a second synthetic resin having a low melting point), and also, the contacting band layer has a rough surface integrally formed thereon by mixing the first resin having a high melting point with the second resin having a low melting point. That is, the above patent uses the principle that powders or particles of two or more resins having different melting points, selected from nylon, urethane, fluorine based resins, polyolefin resins, and polystyrene resins, each of which has low friction, are mixed to obtain a resin mixture which is then extruded such that powders or particles of the resin having a high melting point are not melted at the extrusion temperature and extrusion pressure due to the high melting point thereof, thus maintaining the powder or particle shape thereof and forming a plurality of protrusions on the surface contacting the window glass.

U.S. Patent No. 5,424,019 discloses a method of forming a plurality of protrusions, which comprises extruding a mixture including a base component formed of a polyolefin resin having a low viscosity and high flowability and an additive component formed of powder or particles of a polyolefin resin having a high viscosity and low flowability, by use of a mold.

U.S. Patent No. 5,110,685 discloses a coating composition, comprising a high density polyethylene component including a blend of a high density polyethylene resin having high molecular weight, a high density polyethylene resin having low molecular weight and a high density polyethylene resin having medium molecular weight, and an elastomer component including a blend of ethylene/propylene rubber (EPR) and high density polyethylene resin.

U.S. Patent No. 5,424,135 discloses a method of forming protrusions using an ultrahigh molecular weight polyolefin resin, comprising adding a small amount of lubricant to an admixture composed of the ultrahigh molecular weight polyolefin resin and low molecular weight polyolefin resin to obtain a resin mixture, which is then extruded.

U.S. Patent No. 6,146,739, which is a technique improving on the method disclosed in U.S. Patent No. 5,424,135, discloses a method of extruding a mixture comprising an ultrahigh molecular weight polyolefin resin, a polyolefin resin, a thermoplastic elastomer component, and optionally a styrene-based block copolymer or derivatives thereof, higher fatty acid, silicon oil, ester and/or a fluoropolymer.

However, the conventional methods using the difference in viscosity to form protrusions are disadvantageous because the resultant composition, comprising polyolefin having a low viscosity and high flowability and polyolefin having a high viscosity and low flowability, still has low abrasion resistance and thus has limited usefulness. To solve such a problem, methods of using ultrahigh molecular weight polyethylene resin are proposed, but they also have drawbacks because the ultrahigh molecular weight polyethylene resin is produced only in the form of powder and is expensive. In addition, the protrusions formed by using such a resin are very hard and hence may scratch a tinting film attached to the window glass when a window is repeatedly opened and closed over a long period of time. Hence, methods of alleviating the above problems need to be devised.

Meanwhile, in the case where a compounding process is conducted by blending resin powders with resin particles to form a blend which is then loaded into an extruder, a separation phenomenon occurs due to the inconsistent particle size, and thus, the resin components are difficult to use in an accurate amount. Therefore, since the resin components are separately loaded into the extruder, the process is complicated. In addition, the powder type material may be easily scattered and is very sensitive to static electricity, and thus, is difficult to use in an accurate amount, and the operation tasks are cumbersome. As discussed above, the conventional techniques should be improved in view of productivity and product uniformity.

### SUMMARY OF THE INVENTION

Leading to the present invention, extensive and intensive research into the development of an inexpensive coating agent for automobile weatherstrips having high abrasion resistance and low friction resistance, carried out by the present inventors aiming to avoid the problems encountered in the prior art, resulted in the finding that a coating composition using at least two general-purpose polyethylene resins available at a relatively low cost to exhibit economic benefits as well as desirable properties.

Accordingly, an object of the present invention is to provide a coating composition for automobile weatherstrips, which may be prepared through simple operations, exhibiting low friction resistance and high abrasion resistance, and does not scratch a tinting film attached to window glass even after the window has been opened or closed a lot of times by vertical movement of the window glass over a long period of time.

Another object of the present invention is to provide a method of preparing such a coating composition for automobile weatherstrips.

A further object of the present invention is to provide an automobile weatherstrip, comprising the coating composition thus prepared.

According to a first embodiment of the present invention there is provided a coating composition for automobile weatherstrips, which comprises (A) 100 parts by weight of a polyolefin resin component comprising (a1) 5-60 parts by weight of a high viscosity-high density polyethylene resin having a melt index (ASTM D1238) of 1 dg/min or less, and (a2) 95-40 parts by weight of a low viscosity-high density polyethylene resin having a melt index of 20 dg/min or more; and (B) 0.01-0.3 parts by weight of a peroxide vulcanizing agent.

According to a second embodiment of the present invention, there is provided a method of preparing a coating agent for automobile weatherstrips, which comprises compounding (A) a polyolefin resin component comprising (a1) 5-60 parts by weight of a high viscosity-high density polyethylene resin having a melt index (ASTM D1238) of 1 dg/min or less, and (a2) 95-40 parts by weight of a low viscosity-high density polyethylene resin having a melt index of 20 dg/min or more, through dynamic vulcanization in the presence of (B) 0.01-0.3 parts by weight of a peroxide vulcanizing agent, based on 100 parts by weight of the polyolefin resin component.

According to a third embodiment of the present invention, there is provided an automobile weatherstrip, in which the above coating agent formed into a single-layered or multi-layered structure on a pressure contacting portion of the automobile weatherstrip.

### DESCRIPTION OF THE PREFERRED EMBODIMENTS

Hereinafter, a detailed description will be given of the present invention.

In accordance with the present invention, a coating composition for automobile weatherstrips comprises (A) a polyolefin resin component comprising (a1) a high viscosity-high density polyethylene resin having a melt index (ASTM D1238) of 1 dg/min or less, and (a2) a low viscosity-high density polyethylene resin having a melt index of 20 dg/min or more; and (B) a peroxide vulcanizing agent. Each component constituting the coating composition is explained in detail as follows.

### (A) Polyolefin Resin Component

### (a1) High Viscosity-High Density Polyethylene Resin

In the present invention, the component (a1) is high density polyethylene having a high viscosity in which a melt index measured according to ASTM D1238 is about 1 dg/min or less, and preferably, about 0.01-0.4 dg/min. The reason why a low melt index is required is that the use of the component (a1) having a melt index exceeding 1 dg/min results in the size of gel being decreased upon dynamic vulcanization by a peroxide, thus causing a formation of imperfect protrusions.

This high viscosity-high density polyethylene resin is used in an amount of about 5-60 parts by weight, and preferably, about 10-40 parts by weight, based on 100 parts by weight of the polyolefin resin component. When the amount of high viscosity-high density polyethylene (HDPE) resin is too low, the formation of the protrusions becomes insignificant. On the other hand, if the amount is too large, this component may be present as a matrix without forming desired protrusions. Specifically, upon preparation of the coating agent of the present invention, the polymer in the component (a1) is changed to have larger molecular weight through the vulcanization that cross-links the already existing molecular chains together by action of the peroxide. Thus, protrusions may be desirably formed as in using an ultrahigh molecular weight polyethylene resin. Since the as-formed protrusions are softer than protrusions formed by use of ultrahigh molecular weight polyethylene, they do not scratch a tinting film of window glass for an automobile vehicle. As such, when this high viscosity HDPE is used in the amount less than 5 parts by weight, based on 100 parts by weight of the polyolefin resin component, the amount of high density polyethylene having larger molecular weight, newly created through the vulcanization, is insufficient. As a result, the effects of the protrusions become insignificant, and the protrusions may be irregular. On the other hand, in case of the amount above 60 parts by weight, the high density polyethylene having larger molecular weight, newly created through the vulcanization, becomes a predominant phase (i.e., matrix phase), resulting in dramatically lowered flowability of the composition. Thus, processability is worsened.

### (a2) Low Viscosity-High Density Polyethylene Resin

The component (a2) is low viscosity-high density polyethylene having a melt index of about 20 dg/min or more measured according to ASTM D1238, and preferably, about 20-45 dg/min. The reason why a high melt index is required is that the use of a component (a2) having a melt index less than 20 dg/min results in poor flowability, irregular protrusions, and poor processability. Taking into consideration that the component (a2) also undergoes dynamic vulcanization in the presence of a peroxide vulcanizing agent, high density polyethylene having a melt index of 20 dg/min or more should be used. Specifically, if the melt index is less than 20 dg/min, the molecular weight of the polymer is further increased due to the vulcanization in the presence of peroxide, resulting in a further lowered melt index, and poor flowability of the composition. Consequently, processability is worsened.

While the polymer in the component (a2) is changed to have larger molecular weight through the vulcanization, which is a process of cross-linking the already existing molecular chains together by action of the peroxide vulcanizing agent, upon preparation of the coating agent, it may function to control flowability of the composition, and to morphologically stabilize the composition such that the protrusions are easily formed by the component (a1). The high density polyethylene resin having a low viscosity is used in an amount of about 95-40 parts by weight, and preferably, about 90-60 parts by weight, based on 100 parts by weight of the polyolefin resin component. If the amount of component (a2) is too high, that is, if the amount of component (a1) is too low, the intended extent of the formation of protrusions on the coating layer become insignificant. On the other hand, if the amount of (a2) is too low, that is, if the amount of (a1) is too high, a high density polyethylene component having a high viscosity becomes a matrix phase, as discussed above. As a result, flowability is dramatically decreased, thus processability may be worsened.

### (B) Peroxide Vulcanizing Agent

The vulcanizing agent usable in the present invention is a peroxide vulcanizing agent, examples of which are not particularly limited. Any conventional vulcanizing agent known in the art may be used. The peroxide vulcanizing agent is typically exemplified by organic peroxides, including dialkylperoxide, diacylperoxide, peroxyester, ketoneperoxide, Specifically, there are dicumyl peroxide, di-t-butyl peroxide, 2,5-dimethyl-2,5-di-(t-butylperoxy)hexane, t-butyl cumyl peroxide, . The peroxide vulcanizing agent is used in an amount of about 0.01-0.3 parts by weight, and preferably, about 0.02-0.1 parts by weight, based on 100 parts by weight of the polyolefin resin component. If the amount of vulcanizing agent is too low, intended addition effects cannot be expected, and thus the vulcanization of the components (a1) and (a2) occurs insufficiently. Consequently, it suffers from the poor formation of the protrusions. As is apparent from the experimental results of the following Examples and Comparative Examples, high abrasion resistance and low friction resistance of the coating agent cannot be obtained at a desired level. However, when the amount of vulcanizing agent is too high, irregular protrusions, along with offensive odors, may be formed due to the unmelted gel.

Furthermore, with the goal of improving the properties of the coating composition of the present invention, it is preferable that the following optional components be used.

### (C) Higher Fatty Acid, Silicon Oil and/or Fluoropolymer

According to the present invention, to further reduce friction resistance with glass by increasing the slipping phenomenon occurring on the protrusions of the coating layer, the coating composition for automobile weatherstrips further contains any one selected from a higher fatty acid, silicon oil, a fluoropolymer, and combinations thereof.

The higher fatty acid component is not particularly limited, and may use those known in the art such as stearic acid and lauric acid, alone or in combination.

The silicon oil is not particularly limited, and may be selected from silicon oils having a kinematic viscosity range from about 500 to 1500 cSt at 25°C.

The fluoropolymer may serve to participate in the formation of protrusions, in addition to common functions of the component (C), and thus is responsible for effectively decreasing frictional force with glass while aiding the formation of protrusions. The fluoropolymer is not particularly limited, and may be chosen from those known in the art, for example, polytetrafluoroethylene, vinylidene fluoride copolymer, Preferably, polytetrafluoroethylene may be used. In particular, a fluoropolymer having a maximum particle size of about 15-150 µm and a 50% average particle size of about 2-100 µm, and preferably, a fluoropolymer having a maximum particle size of about 50-100 µm and a 50% average particle size of about 10-60 µm, may be used.

The component (C) may be used in an amount of about 1-30 parts by weight, and preferably, about 2-20 parts by weight, based on 100 parts by weight of the polyolefin resin component. When this component is used in too small an amount, intended addition effects may not be expected. Meanwhile, when the component is used in too large an amount, a slipping phenomenon may increasingly occur at the interfaces of components constituting the coating composition, and thus a mixing process may be retarded. Hence, the above component should be used in the appropriate range.

### (D) Additive Components

While maintaining the fundamental properties of the coating composition of the present invention, one or more conventional additives selected from various additives used in compounding of plastic components may be employed to slightly affect the properties of the resulting composition. These additives are exemplified by an inorganic filler, a processing adjuvant, a colorant (carbon black, pigment, .), an antioxidant, a UV stabilizer, . When the additive component is used in too large an amount, it may negatively affect the abrasion resistance of the coating composition. To prevent such negative effects, the above component should be used in an appropriate range. Preferably, the additive is used in an amount up to about 20 parts by weight, based on 100 parts by weight of the polyolefin resin component.

Then, the aforementioned components undergo a compounding process, which is commonly known in the art, to prepare a coating agent for automobile weatherstrips. As such, dynamic vulcanization is adopted, through which the molten polymers are mixed and cross-linked. That is, the peroxide present in the composition is converted into a radical component by external energy (heat, pressure, shear force, .), after which the radical component functions to cross-link the molecular chains in the polyethylene polymer. Through dynamic vulcanization, a chemical reaction is conducted while the raw materials are mixed. As a result, the already existing molecular chains of the polymers in the components (a1) and (a2) are cross-linked together to obtain larger molecular weight. To this end, the melt index and compositional ratio of each of the components (a1) and (a2), and the amount of peroxide vulcanizing agent should be specifically controlled, as discussed above.

The dynamic vulcanization may be easily conducted using various apparatuses such as a twin-screw extruder or a Banbury mixer. Among them, the twin-screw extruder can more effectively control shear force applied to the materials, compared to the conventional compounding apparatuses, and thus is preferably used to give a morphologically desirable cross-linked composition during the dynamic vulcanization.

In this regard, the mixing may be performed under typical process conditions known in the art.

The coating agent thus prepared is applied on a pressure contacting portion of an automobile weatherstrip structure, in particular, a glass run channel, to form a coating layer. As such, the coating layer may be formed into a single-layered or a multi-layered structure (i.e., including at least two layers). The forming process of such a structure is not particularly limited, and may adopt a conventional molding process, for example, extrusion, injection molding, . Preferably, an extrusion is used.

A better understanding of the present invention may be obtained in light of Examples and Comparative Examples below which are set forth to illustrate, but are not to be construed to limit the present invention.

### Comparative Example 1

30 parts by weight of a high viscosity-high density polyethylene resin (a1) having a melt index of 0.04 dg/min, and 70 parts by weight of a low viscosity-high density polyethylene resin (a2) having a melt index of 20.0 dg/min, were mixed with 0.1 parts by weight of an antioxidant (d1) and 1 part by weight of a colorant (d2), based on 100 parts by weight of the polyolefin resin component, by use of a twin-screw extruder. As the twin-screw extruder, a co-rotation and intermeshing type twin-screw extruder having 40 Φ (screw diameter: 40 mm), and a ratio of length/diameter (L/D) equal to 38 was used (trade name: ZSK-40, available from W&P Co. Ltd.). The mixing was conducted at 180-210°C and a screw rotation rate of about 200 rpm. All components were loaded through a main feeder at the same time, to prepare a coating composition. The components used in the preparation of the composition are shown in Table 1 below.

### Example 1

A coating composition was prepared in the same manner as in Comparative Example 1, with the exception that 0.04 parts by weight of a peroxide vulcanizing agent (b) were additionally used. The components used in the preparation of the composition are shown in Table 1 below.

### Example 2

A coating composition was prepared in the same manner as in Example 1, with the exception that 5 parts by weight of a fluoropolymer (c1) were additionally used. The components used in the preparation of the composition are shown in Table 1 below.

### Example 3

A coating composition was prepared in the same manner as in Example 1, with the exception that 5 parts by weight of a fluoropolymer (c1) and 1 part by weight of silicon oil (c2) were additionally used. The components used in the preparation of the composition are shown in Table 1 below.

### Example 4

A coating composition was prepared in the same manner as in Example 1, with the exception that 10 parts by weight of a fluoropolymer (c1) and 2 parts by weight of silicon oil (c2) were additionally used. The components used in the preparation of the composition are shown in Table 1 below.

### Example 5

A coating composition was prepared in the same manner as in Example 1, with the exception that 10 parts by weight of a fluoropolymer (c1) and 4 parts by weight of silicon oil (c2) were additionally used. The components used in the preparation of the composition are shown in Table 1 below.

### Comparative Example 2

As a conventional coating composition for automobile weatherstrips obtained using ultrahigh molecular weight polyethylene (UHMWPE) having a high density, a coating composition was prepared by mixing 80 parts by weight of a low viscosity-high density polyethylene resin (a2) having a melt index of 20.0 dg/min and 20 parts by weight of UHMWPE powder available under XM-221U from Mitsui Chemicals Inc. (M_{w}: 2,000,000, average particle size 25 µm, and apparent density 0.4 g/cm³), with 0.1 parts by weight of an antioxidant (d1) and 1 part by weight of a colorant (d2), based on 100 parts by weight of the polyolefin resin component, in the same manner as in Comparative Example 1.

### Comparative Example 3

A coating composition was prepared in the same manner as in Comparative Example 2, with the exception that 1 part by weight of an amide-based slipping agent (d3) was additionally used.

**TABLE 1**

| (unit: part by weight) | | | | | | | | |
|---|---|---|---|---|---|---|---|---|
| Component | C.Ex.1 | Ex.1 | Ex.2 | Ex.3 | Ex.4 | Ex.5 | C.Ex.2 | C.Ex.3 |
| a1 | 30 | 30 | 30 | 30 | 30 | 30 | | |
| a2 | 70 | 70 | 70 | 70 | 70 | 70 | 80 | 80 |
| UHMWPE | | | | | | | 20 | 20 |
| b | | 0.04 | 0.04 | 0.04 | 0.04 | 0.04 | | |
| c1 | | | 5 | 5 | 10 | 10 | | |
| c2 | | | | 1 | 2 | 4 | | |
| d1 | 0.1 | 0.1 | 0.1 | 0.1 | 0.1 | 0.1 | 0.1 | 0.1 |
| d2 | 1 | 1 | 1 | 1 | 1 | 1 | 1 | 1 |
| d3 | | | | | | | | 1 |
| | | | | | | | | |

| | | | | | | | | |
|---|---|---|---|---|---|---|---|---|
| Note: a1: high viscosity-high density polyethylene, HDPE 8800 available from SK Co. Ltd., Korea, MI 0.04 dg/min, density 0.956 g/cm³ a2: low viscosity-high density polyethylene, HDPE 7200 available from SK Co. Ltd., Korea, MI 20.0 dg/min, density 0.961 g/cm³ b: peroxide vulcanizing agent, Perkadox 14R-GR available from Kayaku Akzo Corp. Japan, purity 99.2%, vulcanization temperature 180°C, specific gravity 1.08 c1: fluoropolymer, KTL-450 available from Kitamura Limited, Japan, maximum particle size 88 µm, 50% average particle size 22 µm, apparent density 0.50 g/cm³ c2: silicon oil, 200R Fluid 1000 CST available from Dow Coming Corp., USA, viscosity at 25°C 1000 cSt d1: antioxidant, Songnox 21B available from Songwon Industrial Co. Ltd., Korea d2: colorant, UWM 9012-1 available from Yoo Won Com-Tech Corp., Korea, carbon black of LDPE base, 45 wt% master batch d3: amide-based slipping agent, Armoslip CP available from Akzo Nobel N.V. of the Netherlands, amide purity 99.3%, melting point 73.5°C | | | | | | | | |

To evaluate the abrasion resistance of each of the coating agents prepared in Examples and Comparative Examples according to the composition of Table 1, completely cross-linked olefin thermoplastic elastomer (TPV: Plasmer 1065BM available from SK Co. Ltd., Korea) having shore hardness of 65A was co-extruded using two single screw extruders, to manufacture a 20 x 150 mm (width x length) size of extruded sheet sample having a 250 µm thick coating layer. Before the test, protrusions formed on the coating layer were observed with the naked eye. The results are given in Table 2 below.

The abrasion resistance test was conducted at room temperature. Each sample was mounted to an abrasion resistance tester which was manufactured by SK Co. Ltd. of Korea such that window glass was brought into contact perpendicular to the sample under loads of 1, 2 and 3 kg, respectively, and then reciprocating friction movements were conducted at 60 Hz, to evaluate abrasion resistance of the coating agent. In this test, the reciprocating friction movement was conducted 30,000 times for each load, and the degree of abrasion was checked every 1,000 times. When abrasion was observed on the surface of the coating agent, the reciprocating friction movement was stopped. The number of reciprocating movements up to this point was recorded. The results are given in Table 2 below.

In addition, according to the above process, a 63.5 x 63.5 mm (width x length) size of regular square-shaped, extruded sheet sample having a 250 µm thick coating layer was manufactured, the dynamic friction coefficient and static friction coefficient of which were measured at room temperature according to ASTM D1894. The results are given in Table 2 below.

Using the coating agents of Examples 3 to 5 and Comparative Examples 2 and 3, which have been considered to be superior in performance as coating agents for automobile weatherstrips in the light of the measured abrasion resistance and friction coefficient test results, glass run channels were typically manufactured and then assayed for the degree of scratching of a tinting film (a general automobile tinting film manufactured by subjecting a thin and transparent polyester film to vacuum deposition, coating and lamination). The results are given in Table 2. In addition, the glass run channel was mounted to an automobile door durability tester. For the durability test, opening and closing operations of window glass were repeated a total of 100,000 times in such a manner that window glass coated with a general tinting film was subjected to opening and closing operations 1,000 times at 30 Hz while repeatedly alternating each of the sets of conditions of (1) 23°C and 50% relative humidity, (2) 80°C and 90% relative humidity and (3) -30°C and 0% relative humidity. Subsequently, the degree of scratching of the tinting film was observed and then evaluated according to five criteria, 4 (very high number of scratches), 3 (somewhat high number of scratches), 2 (somewhat low number of scratches), 1 (very low number of scratches), and 0 (no). The results are given in Table 2 below.

**TABLE 2**

| Items | | C.Ex.1 | Ex.1 | Ex.2 | Ex.3 | Ex.4 | Ex.5 | C.Ex.2 | C.Ex.3 |
|---|---|---|---|---|---|---|---|---|---|
| Extent of Protrusions on Coating Layer | | Low | High | High | High | High | High | High | High |
| Abrasion Resist. (times) | 1 kg | 30,000 | 30,000 | 30,000 | 30,000 | 30,000 | 30,000 | 30,000 | 30,000 |
| | 2 kg | 12,000 | 25,000 | 30,000 | 30,000 | 30,000 | 30,000 | 30,000 | 30,000 |
| | 3 kg | 7,000 | 17,000 | 26,000 | 28,000 | 30,000 | 30,000 | 28,000 | 30,000 |
| Static Friction Coefficient | | 0.29 | 0.22 | 0.18 | 0.15 | 0.13 | 0.13 | 0.17 | 0.13 |
| Dynamic Friction Coefficient | | 0.28 | 0.22 | 0.17 | 0.14 | 0.12 | 0.11 | 0.15 | 0.13 |
| Film Scratch | | | | | 1 | 0 | 0 | 2 | 1 |

As is apparent from Table 2, protrusions may be formed even when the high viscosity-high density polyethylene resin and the low viscosity-high density polyethylene resin (Comparative Example 1) are simply mixed to some degree. However, since the protrusions thus formed are small, they do not reduce the friction coefficient to a desired level. Further, such protrusions are formed using only general-purpose high density polyethylene resins, and the abrasion resistance thereof is low.

In Example 1, the protrusions are formed through the vulcanization of the two high density polyethylene resins in the presence of the peroxide vulcanizing agent. As a result, the abrasion resistance is increased and the friction coefficient is effectively reduced, compared to Comparative Example 1. Although, compared to Comparative Examples 2 and 3 using the ultrahigh molecular weight polyethylene resin, an increase in abrasion resistance and reduction in friction coefficient in Example 1 are slightly deteriorated, superior price competitiveness in terms of practical material cost is exhibited in Example 1. In particular, the general-purpose polyethylene resins are provided in the form of pellets, and thus, it may be easily handled and be loaded in a more accurate amount, thus forming a coating layer having better quality with uniform, compared to coating layers obtained by using ultrahigh molecular weight polyethylene resin provided in the form of powder.

In addition, although the coating agent of Example 2 obtained by further adding the fluoropolymer has abrasion resistance and friction resistance superior to the coating agent of Example 1, some properties are still deteriorated, compared to Comparative Examples 2 and 3 using the ultrahigh molecular weight polyethylene resin. However, while the degree of deterioration of properties is not serious, the above coating agent obtained in Example 2 can exhibit better economic benefits, easier handling, and more uniform coatability than coating agents resulting from the use of ultrahigh molecular weight polyethylene.

Examples 3 to 5, in which the fluoropolymer and the silicon oil are further added, exhibit an abrasion resistance similar to that of the coating agent resulting from the use of ultrahigh molecular weight polyethylene. In particular, the above coating agents have economic benefits, as well as abrasion resistance and friction resistance equal to the coating agent of Comparative Example 3. Moreover, in the degree of scratching of a tinting film, the coating agent of the present invention is superior to that of Comparative Example 3 using the ultrahigh molecular weight polyethylene resin. Therefore, such a result indicates that other properties which have not been recognized by the conventional techniques are also improved.

As described above, the coating composition according to the present invention advantageous in various aspects because it can be simply prepared using only inexpensive general-purpose polyolefin resins to achieve performance equal or superior to that derived from the conventional coating agents. Particularly, unlike conventional techniques using an ultrahigh molecular weight polyolefin resin, the coating agent of the present invention does not cause secondary problems, for example, does not damage the surface of an automobile tinting film. In addition, since the general-purpose polyethylene resins can be provided in the form of particles, it may be easily handled and be loaded in a more accurate amount, thus realizing a coating agent having uniform quality.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A coating composition for automobile weatherstrips, comprising:
(A) 100 parts by weight of a polyolefin resin component comprising (a1) 5-40 parts by weight of a high viscosity-high density polyethylene resin having a melt index (ASTM D1238) of 1 dg/min or less, and (a2) 95-60 parts by weight of a low viscosity-high density polyethylene resin having a melt index of 20 dg/min or more; and
(B) 0.01-0.3 parts by weight of a peroxide vulcanizing agent.

2. The coating composition as set forth in claim 1, wherein the component (a1) is used in an amount of 10-40 parts by weight, and the component (a2) is used in an amount of 90-60 parts by weight, based on 100 parts by weight of the polyolefin resin.

3. The coating composition as set forth in claim 1, wherein the component (B) is used in an amount of 0.02-0.1 parts by weight, based on 100 parts by weight of the polyolefin resin.

4. The coating composition as set forth in claim 1, wherein the component (a1) has a melt index of 0.01-0.4 dg/min, and the component (a2) has a melt index of 20-45 dg/min.

5. The coating composition as set forth in claim 1, further comprising (C) 1-30 parts by weight of one or more selected from the group consisting of a higher fatty acid, silicon oil, a fluoropolymer and combinations thereof, based on 100 parts by weight of the polyolefin resin.

6. The coating composition as set forth in claim 5, wherein the component (C) is used in an amount of 2-20 parts by weight, based on 100 parts by weight of the polyolefin resin.

7. The coating composition as set forth in claim 5, wherein the higher fatty acid is stearic acid or lauric acid.

8. The coating composition as set forth in claim 5, wherein the silicon oil has a kinematic viscosity of about 500-1500 cSt at 25 deg. C.

9. The coating composition as set forth in claim 5, wherein the fluoropolymer has a maximum particle size of 15-150 µm and a 50% average particle size of 2-100 µm.

10. The coating composition as set forth in claim 9, wherein the fluoropolymer has a maximum particle size of 50-100 µm and a 50% average particle size of 10-60 µm.

11. The coating composition as set forth in claim 1, further comprising (D) 20 parts by weight or less of an additive selected from the group consisting of an inorganic filler, a processing adjuvant, a colorant, an antioxidant, an UV stabilizer, and combinations thereof, based on 100 parts by weight of the polyolefin resin.

12. The coating composition as set forth in claim 5, further comprising (D) 20 parts by weight or less of an additive selected from the group consisting of an inorganic filler, a processing adjuvant, a colorant, an antioxidant, an UV stabilizer, and combinations thereof, based on 100 parts by weight of the polyolefin resin.

13. A method of preparing a coating agent for automobile weatherstrips, comprising compounding (A) a polyolefin resin component comprising (a1) 5-40 parts by weight of a high viscosity-high density polyethylene resin having a melt index (ASTM D1238) of 1 dg/min or less, and (a2) 95-60 parts by weight of a low viscosity-high density polyethylene resin having a melt index of 20 dg/min or more, through dynamic vulcanization in the presence of (B) 0.01-0.3 parts by weight of a peroxide vulcanizing agent, based on 100 parts by weight of the polyolefin resin component.

14. The method as set forth in claim 13 wherein the compounding step is carried out by use of a twin-screw extruder or a Banbury mixer.

15. The method as set forth in claim 13, wherein (C) one selected from the group consisting of a higher fatty acid, silicon oil, a fluoropolymer and combinations thereof, is further used in an amount of 1-30 parts by weight, based on 100 parts by weight of the polyolefin resin, for the compounding step.

16. The method as set forth in claim 13, wherein (D) an additive selected from the group consisting of an inorganic filler, a processing adjuvant, a colorant, an antioxidant, an UV stabilizer and combinations thereof, is further used in an amount of not more than 20 parts by weight, based on 100 parts by weight of the polyolefin resin, for the compounding step.

17. The method as set forth in claim 15, wherein (D) an additive selected from the group consisting of an inorganic filler, a processing adjuvant, a colorant, an antioxidant, an ultraviolet stabilizer and combinations thereof, is further used in an amount of not more than 20 parts by weight, based on 100 parts by weight of the polyolefin resin, for the compounding step.

18. An automobile weatherstrip comprising a single-layered or multilayered structure made from either the coating composition of any one of claims 1 to 12, or from the coating agent prepared according to the method of claims 13 to 17 on a pressure contacting portion of the automobile weatherstrip.

## Patentansprüche

1. Beschichtungsmasse für Dichtungsleisten von Automobilen, umfassend:
(A) 100 Gewichtsteile einer Polyolefinharzkomponente, umfassend (a1) 5 bis 40 Gewichtsteile eines Polyethylenharzes von hoher Dichte und hoher Viskosität mit einem Schmelzindex (ASTM D1238) von 1 dg/min oder weniger und (a2) 95 bis 60 Gewichtsteile eines Polyethylenharzes von hoher Dichte und geringer Viskosität mit einem Schmelzindex von 20 dg/min oder mehr, und
(B) 0,01 bis 0,3 Gewichtsteile eines Peroxid-Vulkanisiermittels.

2. Beschichtungsmasse nach Anspruch 1, wobei die Komponente (a1) in einer Menge von 10 bis 40 Gewichtsteilen verwendet wird und die Komponente (a2) in einer Menge von 90 bis 60 Gewichtsteilen verwendet wird, bezogen auf 100 Gewichtsteile des Polyolefinharzes.

3. Beschichtungsmasse nach Anspruch 1, wobei die Komponente (B) in einer Menge von 0,02 bis 0,1 Gewichtsteilen verwendet wird, bezogen auf 100 Gewichtsteile des Polyolefinharzes.

4. Beschichtungsmasse nach Anspruch 1, wobei die Komponente (a1) einen Schmelzindex von 0,01 bis 0,4 dg/min aufweist und die Komponente (a2) einen Schmelzindex von 20 bis 45 dg/min aufweist.

5. Beschichtungsmasse nach Anspruch 1, ferner umfassend (C) 1 bis 30 Gewichtsteile eines oder mehrerer Vertreter, ausgewählt aus einer höheren Fettsäure, Silikonöl, einem Fluorpolymer und Kombinationen davon, bezogen auf 100 Gewichtsteile des Polyolefinharzes.

6. Beschichtungsmasse nach Anspruch 5, wobei die Komponente (C) in einer Menge von 2 bis 20 Gewichtsteilen verwendet wird, bezogen auf 100 Gewichtsteile des Polyolefinharzes.

7. Beschichtungsmasse nach Anspruch 5, wobei die höhere Fettsäure Stearinsäure oder Laurinsäure ist.

8. Beschichtungsmasse nach Anspruch 5, wobei das Silikonöl eine kinematische Viskosität von etwa 500 bis 1500 cSt bei 25 °C aufweist.

9. Beschichtungsmasse nach Anspruch 5, wobei das Fluorpolymer eine maximale Teilchengröße von 15 bis 150 µm und eine 50%-Mittelteilchengröße von 2 bis 100 µm aufweist.

10. Beschichtungsmasse nach Anspruch 9, wobei das Fluorpolymer eine maximale Teilchengröße von 50 bis 100 µm und eine 50%-Mittelteilchengröße von 10 bis 60 µm aufweist.

11. Beschichtungsmasse nach Anspruch 1, ferner umfassend (D) 20 Gewichtsteile oder weniger eines Zusatzstoffs, ausgewählt aus einem anorganischen Füllstoff, einem Verarbeitungshilfsstoff, einem Farbmittel, einem Antioxidans, einem UV-Stabilisator und Kombinationen davon, bezogen auf 100 Gewichtsteile des Polyolefinharzes.

12. Beschichtungsmasse nach Anspruch 5, ferner umfassend (D) 20 Gewichtsteile oder weniger eines Zusatzstoffs, ausgewählt aus einem anorganischen Füllstoff, einem Verarbeitungshilfsstoff, einem Farbmittel, einem Antioxidans, einem UV-Stabilisator und Kombinationen davon, bezogen auf 100 Gewichtsteile des Polyolefinharzes.

13. Verfahren zum Herstellen eines Beschichtungsmittels für Dichtungsleisten von Automobilen, umfassend Compoundieren von (A) einer Polyolefinharzkomponente, umfassend (a1) 5 bis 40 Gewichtsteile eines Polyethylenharzes von hoher Dichte und hoher Viskosität mit einem Schmelzindex (ASTM D1238) von 1 dg/min oder weniger und (a2) 95 bis 60 Gewichtsteile eines Polyethylenharzes von hoher Dichte und geringer Viskosität mit einem Schmelzindex von 20 dg/min oder mehr, durch dynamische Vulkanisation in Gegenwart von (B) 0,01 bis 0,3 Gewichtsteilen eines Peroxid-Vulkanisiermittels, bezogen auf 100 Gewichtsteile der Polyolefinharzkomponente.

14. Verfahren nach Anspruch 13, wobei der Compoundierschritt unter Verwendung eines Doppelschneckenextruders oder eines Banbury-Mischers durchgeführt wird.

15. Verfahren nach Anspruch 13, wobei (C) ein Vertreter, ausgewählt aus einer höheren Fettsäure, Silikonöl, einem Fluorpolymer und Kombinationen davon, ferner in einer Menge von 1 bis 30 Gewichtsteilen, bezogen auf 100 Gewichtsteile des Polyolefinharzes, für den Compoundierschritt verwendet wird.

16. Verfahren nach Anspruch 13, wobei (D) ein Zusatzstoff, ausgewählt aus einem anorganischen Füllstoff, einem Verarbeitungshilfsstoff, einem Farbmittel, einem Antioxidans, einem UV-Stabilisator und Kombinationen davon, ferner in einer Menge von höchstens 20 Gewichtsteilen, bezogen auf 100 Gewichtsteile des Polyolefinharzes, für den Compoundierschritt verwendet wird.

17. Verfahren nach Anspruch 15, wobei (D) ein Zusatzstoff, ausgewählt aus einem anorganischen Füllstoff, einem Verarbeitungshilfsstoff, einem Farbmittel, einem Antioxidans, einem Ultraviolett-Stabilisator und Kombinationen davon, ferner in einer Menge von höchstens 20 Gewichtsteilen, bezogen auf 100 Gewichtsteile des Polyolefinharzes, für den Compoundierschritt verwendet wird.

18. Dichtungsleiste von Automobilen, umfassend eine einschichtige oder mehrschichtige Struktur, die aus entweder der Beschichtungsmasse nach einem der Ansprüche 1 bis 12 oder aus dem Beschichtungsmittel, das nach dem Verfahren der Ansprüche 13 bis 17 hergestellt wurde, erzeugt wurde, auf einem Abschnitt der Dichtungsleiste von Automobilen, der unter Druck kontaktiert wird.

## Revendications

1. Composition de revêtement pour joints d'étanchéité de véhicules automobiles, comprenant :
(A) 100 parties en masse d'un composant résine polyoléfine comprenant (a1) 5-40 parties en masse d'une résine polyéthylène de haute densité-haute viscosité ayant un indice de fusion (ASTM D1238) de 1 dg/min ou moins, et (a2) 95-60 parties en masse d'une résine polyéthylène de haute densité-basse viscosité ayant un indice de fusion de 20 dg/min ou plus ; et
(B) 0,01-0,3 partie en masse d'un agent vulcanisant de type peroxyde.

2. Composition de revêtement selon la revendication 1, où le composant (a1) est utilisé en une quantité de 10-40 parties en masse et le composant (a2) est utilisé en une quantité de 90-60 parties en masse, sur la base de 100 parties en masse de la résine polyoléfine.

3. Composition de revêtement selon la revendication 1, où le composant (B) est utilisé en une quantité de 0,02-0,1 partie en masse sur la base de 100 parties en masse de la résine polyoléfine.

4. Composition de revêtement selon la revendication 1, où le composant (a1) a un indice de fusion de 0,01-0,4 dg/min et le composant (a2) a un indice de fusion de 20-45 dg/min.

5. Composition de revêtement selon la revendication 1, comprenant en outre (C) 1-30 parties en masse d'un ou plusieurs choisis dans le groupe consistant en un acide gras supérieur, une huile de silicone, un fluoropolymère et leurs combinaisons, sur la base de 100 parties en masse de la résine polyoléfine.

6. Composition de revêtement selon la revendication 5, où le composant (C) est utilisé en une quantité de 2-20 parties en masse sur la base de 100 parties en masse de la résine polyoléfine.

7. Composition de revêtement selon la revendication 5, où l'acide gras supérieur est l'acide stéarique ou l'acide laurique.

8. Composition de revêtement selon la revendication 5, où l'huile de silicone a une viscosité cinématique d'environ 500-1500 cSt à 25°C.

9. Composition de revêtement selon la revendication 5, où le fluoropolymère a une taille de particules maximale de 15-150 µm et une taille de particules moyenne à 50 % de 2-100 µm.

10. Composition de revêtement selon la revendication 9, où le fluoropolymère a une taille de particules maximale de 50-100 µm et une taille de particules moyenne à 50 % de 10-60 µm.

11. Composition de revêtement selon la revendication 1, comprenant en outre (D) 20 parties en masse ou moins d'un additif choisi dans le groupe consistant en une charge inorganique, un adjuvant de traitement, un colorant, un antioxydant, un stabilisant aux UV, et leurs combinaisons, sur la base de 100 parties en masse de la résine polyoléfine.

12. Composition de revêtement selon la revendication 5, comprenant en outre (D) 20 parties en masse ou moins d'un additif choisi dans le groupe consistant en une charge inorganique, un adjuvant de traitement, un colorant, un antioxydant, un stabilisant aux UV, et leurs combinaisons, sur la base de 100 parties en masse de la résine polyoléfine.

13. Procédé de préparation d'un agent de revêtement pour joints d'étanchéité de véhicules automobiles, comprenant la combinaison (A) d'un composant résine polyoléfine comprenant (a1) 5-40 parties en masse d'une résine polyéthylène de haute densité-haute viscosité ayant un indice de fusion (ASTM D1238) de 1 dg/min ou moins, et (a2) 95-60 parties en masse d'une résine polyéthylène de haute densité-basse viscosité ayant un indice de fusion de 20 dg/min ou plus, par vulcanisation dynamique en présence de (B) 0,01-0,3 partie en masse d'un agent vulcanisant de type peroxyde, sur la base de 100 parties en masse du composant résine polyoléfine.

14. Procédé selon la revendication 13, où l'étape de combinaison est réalisée par l'utilisation d'une extrudeuse à double vis ou d'un mélangeur Banbury.

15. Procédé selon la revendication 13, où (C) l'un choisi dans le groupe consistant en un acide gras supérieur, une huile de silicone, un fluoropolymère et leurs combinaisons, est utilisé en outre en une quantité de 1-30 parties en masse sur la base de 100 parties en masse de la résine polyoléfine, pour l'étape de combinaison.

16. Procédé selon la revendication 13, où (D) un additif choisi dans le groupe consistant en une charge inorganique, un adjuvant de traitement, un colorant, un antioxydant, un stabilisant aux ultraviolets et leurs combinaisons, est utilisé en outre en une quantité ne dépassant pas 20 parties en masse sur la base de 100 parties en masse de la résine polyoléfine, pour l'étape de combinaison.

17. Procédé selon la revendication 15, où (D) un additif choisi dans le groupe consistant en une charge inorganique, un adjuvant de traitement, un colorant, un antioxydant, un stabilisant aux ultraviolets et leurs combinaisons, est utilisé en outre en une quantité ne dépassant pas 20 parties en masse sur la base de 100 parties en masse de la résine polyoléfine, pour l'étape de combinaison.

18. Joint d'étanchéité de véhicules automobiles comprenant une structure monocouche ou multicouche constituée soit à partir de la composition de revêtement selon l'une quelconque des revendications 1 à 12, soit à partir de l'agent de revêtement préparé selon le procédé selon les revendications 13 à 17, sur une partie de contact à pression du joint d'étanchéité de véhicules automobiles.
